# EUROPEAN PATENT APPLICATION

(11) **EP 4 718 586 A1**
(43) Date of publication of application: **01.04.2026**
(21) Application number: 24898120.1
(22) Date of filing: 27.11.2024
(51) Int. Cl.: H01M 10/6551, H01M 10/613, H01M 50/211

(54) **BATTERY MODULE COMPRISING THERMAL RESIN**

(30) Priority: 30.11.2023 KR 20230171174
(71) Applicant: LG Energy Solution, Ltd., Seoul 07335 (KR)
(72) Inventor: KIM, Taewan, Daejeon 34122 (KR); CHUN, Yongho, Daejeon 34122 (KR); LEE, Dongsu, Daejeon 34122 (KR); KIM, Tan, Daejeon 34122 (KR)
(74) Representative: Plasseraud IP
(86) International application number: PCT/KR2024/018996
(87) International publication number: WO 2025/116526

(57) **Abstract**

The present invention provides a structure of a battery module including: a battery cell; a module frame having a bottom plate whereon the battery cell is disposed; and a thermally conductive resin interposed between a bottom surface of the battery cell and the bottom plate, wherein the bottom plate is provided with a anchor arranged in grid of multiple rows and multiple columns, and the thermally conductive resin extends downward and fills the anchor.

## Description

### [TECHNICAL FIELD]

This application claims the benefit of priority based on Korean Patent Application No. 10-2023-0171174 filed on November 30, 2023, entire content disclosed in the document of the patent applications is included as a part of this specification.

The present invention relates to a structure of a battery module and a battery pack including the same wherein the battery module includes a thermally conductive resin. More specifically, the present invention relates to a structure of a battery module having a strengthened bond between a module frame and a thermally conductive resin interposed between a battery cell and the module frame.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module wherein multiple battery cells are electrically connected is used. Additionally, a plurality of such battery modules may be integrated to constitute a battery pack with higher output and larger capacity.

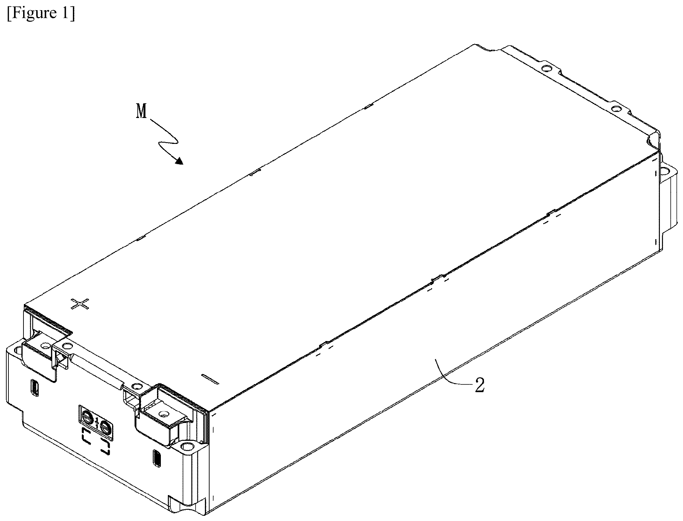

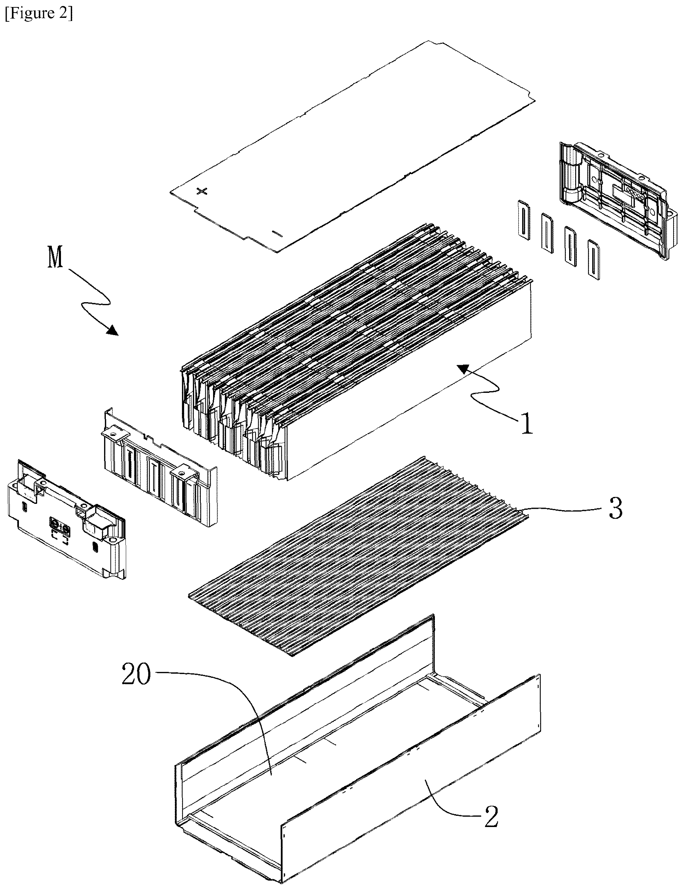

FIGS. 1 and 2 illustrate a structure of a conventional battery module including a thermally conductive resin. Referring to FIGS. 1 and 2, a conventional battery module M includes a battery cell 1 and a module frame 2 accommodating the battery cell 1. A thermally conductive resin 3 that is cured after the battery cell 1 is placed is coated on a bottom plate 20 of the module frame 2.

The battery cell 1 may generate heat for various reasons, and such heat may cause a performance degradation of the battery cell 1. Therefore, it is important that the heat generated from the battery cell 1 is released without being trapped in the module frame 2.

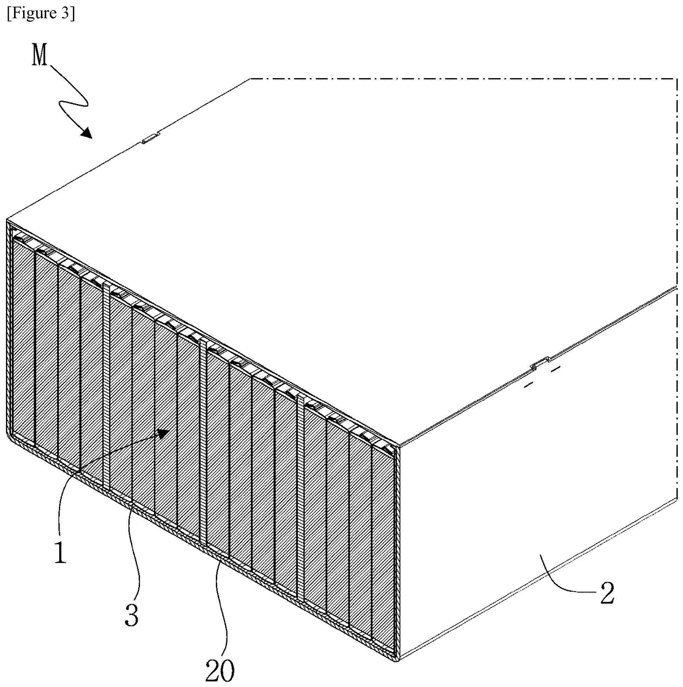

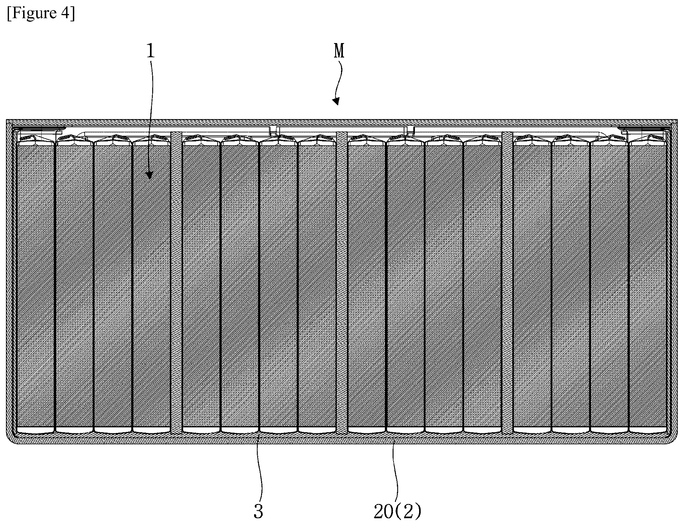

FIGS. 3 and 4 illustrate a cross-section of the battery module of FIG. 1. Referring to FIGS. 3 and 4, as the thermally conductive resin 3 having high thermal conductivity is cured to connect the bottom surface of the battery cell 1 and the bottom plate 20, the battery cell 1 is fixed to the module frame 2 and at the same time, heat generated from the battery cell 1 may be dissipated to the module frame 2.

Meanwhile, the thermally conductive resin 3 and the bottom plate 20 are fixed to each other by the adhesive force generated as the thermally conductive resin 3 is cured. In such structure, when the thermally conductive resin 3 is subjected to shear load in horizontal direction or tensile load in upward direction with respect to the bottom plate 20, the thermally conductive resin 3 may be easily detached from the bottom plate 20. Since such detachment has a great influence on the fixation and heat conduction between the battery cell 1 and the bottom plate 20, the detachment of the thermally conductive resin 3 must be prevented.

### [DISCLOSURE]

### [TECHNICAL PROBLEM]

In order to solve above-described problems of prior art, it is an object of the present invention to provide a structure of a battery module wherein heat generated from a battery cell may be dissipated to the outside of the module housing.

In addition, it is an object of the present invention to provide a structure of a battery module wherein the bonding force between a thermally conductive resin and a module housing is strengthened such that the mechanical fixation and thermal connection between the battery cell and the module housing is firmly maintained.

Specifically, it is an object of the present invention to provide a structure of a battery module capable of preventing the detachment of the thermally conductive resin from the module housing in horizontal direction and/or in vertical direction.

It is another object of the present invention to provide a structure of a battery module wherein heat generated from a battery module may be dissipated to the outside of the pack housing in a battery pack where a plurality of battery modules is embedded.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, the present invention provides a structure of a battery module including: a battery cell; a module frame having a bottom plate whereon the battery cell is disposed; and a thermally conductive resin interposed between a bottom surface of the battery cell and the bottom plate, wherein the bottom plate is provided with a hole-shaped anchor arranged in grid of multiple rows and multiple columns, and the thermally conductive resin is provided with an extension extending downward and filling the anchor.

According to the present invention, since the extension interferes with the anchor in horizontal direction, the thermally conductive resin may resist a shear load generated between the bottom plate and the thermally conductive resin, and the thermally conductive resin may be prevented from being detached from the module frame in horizontal direction.

In addition, according to the present invention, the contact area between the thermally conductive resin and the module housing may be larger than the area of the bottom plate such that the speed at which heat is conducted from the thermally conductive resin to the module housing is high.

Preferably, the anchors may be arranged in grid of three rows or more and three columns or more. In addition, the rows and columns of the anchors may be arranged at equal intervals. Accordingly, the anchors may evenly share the shear stress.

The anchor may include: a first portion having a first width along horizontal direction; and a second portion disposed under the first portion and having a second width greater than the first width along horizontal direction. That is, the anchor may include a first portion and a second portion disposed under the first portion, and the shape of the cross-section of the first portion may not completely encompass the shape of the cross-section of the second portion. As a result, the extension may interfere from above between the first portion and the second portion, and may prevent the thermally conductive resin from being detached from the bottom plate in upward direction.

For example, the anchor may include: a first portion of a circular cross-section having a first inner diameter; and a second portion of a circular cross-section disposed under the first portion and having a second inner diameter greater than the first inner diameter.

According to a first embodiment of the present invention, the first portion may have a rectangular cross-section of predetermined width and length and extend horizontally, and the second portion may have a rectangular cross-section of predetermined width and length and extend horizontally to intersect the first portion.

Alternatively, the anchor may include a tapered portion having a cross-section narrowing along upward direction. The tapered portion may interfere with the extension from above to prevent the thermally conductive resin from separating from the bottom plate in upward direction.

For example, the tapered portion may have a circular cross-section having an inner diameter decreasing in upward direction.

According to a second embodiment of the present invention, the tapered portion of the anchor has truncated cone shape with an inner diameter of an inner circumferential surface thereof decreasing in upward direction.

The thermally conductive resin may include: an upper resin layer disposed on the upper surface of the bottom plate; and a lower resin layer disposed on the lower surface of the bottom plate. Here, the upper resin layer and the lower resin layer may be connected to each other by the extension. The lower resin layer may interfere with the lower surface of the bottom plate from above, so as to prevent the entire thermally conductive resin from being detached from the bottom plate in upward direction. In addition, the thermally conductive resin connects the upper and lower surfaces of the bottom plate such that heat generated from the battery cell may be more effectively dissipated to the outside of the module frame.

According to another aspect of the present invention, the anchor may include grooves recessed in downward direction and arranged in grid of multiple rows and multiple columns rather than holes. Similar to the case where the anchor includes a hole, the extension of the thermally conductive resin interferes with the anchor in horizontal direction, thereby preventing the thermally conductive resin from being detached from the module frame in horizontal direction, and the contact area between the thermally conductive resin and the module housing may be larger than the area of the bottom plate such that the speed at which heat is conducted from the thermally conductive resin to the module housing is high.

The anchors may be arranged in grid of three rows or more and three columns or more. In addition, the rows and columns of the anchors may be arranged at equal intervals. Accordingly, the anchors may evenly share the shear stress.

However, it is not necessary that the anchors be arranged in grid. For example, the anchors may include a groove extending in lengthwise direction, or a plurality of grooves arranged in widthwise direction.

The anchor may include: a first portion having a first width along horizontal direction; and a second portion disposed under the first portion and having a second width greater than the first width along horizontal direction. That is, the anchor may include a first portion and a second portion disposed under the first portion, and the shape of the cross-section of the first portion may not completely encompass the shape of the cross-section of the second portion. As a result, the extension may interfere from above between the first portion and the second portion, and may prevent the thermally conductive resin from being detached from the bottom plate in upward direction.

For example, the anchor may include: a first portion having a rectangular cross-section of a first width and extending in lengthwise direction; and a second portion disposed under the first portion and having a rectangular cross-section of a second width greater than the first width and extending in horizontal direction.

Alternatively, the anchor may include a tapered portion having a cross-section narrowing along upward direction. The tapered portion may interfere with the extension from above to prevent the thermally conductive resin from separating from the bottom plate in upward direction.

For example, the anchor may include a tapered portion extending in lengthwise direction and having a rectangular cross-section narrowing along upward direction.

According to a third embodiment of the present invention, the anchor may include a tapered portion extending in lengthwise direction and having a trapezoidal cross-section with a lower width and an upper width thereof smaller than the lower width in lengthwise direction.

The present invention also provides a structure of a battery pack including the battery module.

The battery pack may include a pack frame whereon the battery module is disposed.

When the anchor includes a hole perforating the bottom plate, the extension may be connected to the pack frame.

Here, as in the second embodiment of the present invention, when the thermally conductive resin includes the upper resin layer and the lower resin layer, the lower resin layer may be attached to the pack frame. Preferably, the lower resin layer may connect the lower surface of the bottom plate and the pack frame.

Since the thermally conductive resin is connected to the pack frame, the heat generated from the battery cell may be conducted to the pack frame, and then dissipated to the outside of the pack frame PF.

In addition, in such case, it is also advantageous in that the battery module is prevented from being detached from the pack frame in horizontal direction due to the anchoring effect of the anchor.

The present invention also provides a structure of a vehicle including the battery pack. The battery pack may be built into a vehicle as a power source. The vehicle may be a hybrid vehicle or an electric vehicle. The vehicle may be a two-wheeled vehicle or a four-wheeled vehicle. However, the structure of the vehicle is not limited to the above, and it is not necessary that the battery pack serve as a power source for the vehicle.

### [ADVANTAGEOUS EFFECTS]

The present invention may provide a structure of a battery module wherein a battery cell and a module housing are thermally connected via a thermally conductive resin to dissipate heat generated from the battery cell to the outside of the module housing.

In addition, the present invention provides a structure of a battery module wherein the bonding force between a thermally conductive resin and a module housing is strengthened such that the mechanical fixation and thermal connection between the battery cell and the module housing is firmly maintained.

Specifically, the present invention may provide a structure of a battery module wherein the horizontal detachment of the thermally conductive resin from the module housing is prevented by the interference between the anchor and the extension of the thermally conductive resin extending downward, and wherein the vertical detachment of the thermally conductive resin from the module housing is prevented by the shape of the cross-section of the anchor.

The present invention may also provide a structure of a battery module wherein heat generated from a battery cell may be dissipated to the outside of the pack housing via a thermally conductive resin extending through the module housing and connected to the pack housing in a battery pack where a plurality of battery modules are embedded.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a conventional battery module including a thermally conductive resin.
FIGS. 3 and 4 illustrate a cross-section of the battery module of FIG. 1.
FIG. 5 illustrates a structure of a battery module according to a first embodiment of the present invention.
FIGS. 6 to 8 illustrate a structure of a module frame according to the first embodiment of the present invention.
FIGS. 9 and 10 illustrate a cross-section of a battery module according to the first embodiment of the present invention.
FIG. 11 illustrates the structure of a battery module according to a second embodiment of the present invention.
FIGS. 12 to 14 illustrate a structure of a module frame according to the second embodiment of the present invention.
FIGS. 15 and 16 illustrate a cross-section of a battery module according to the second embodiment of the present invention.
FIG. 17 illustrates a structure of a battery module according to a third embodiment of the present invention.
FIGS. 18 to 20 illustrate a structure of a module frame according to the third embodiment of the present invention.
FIGS. 21 and 22 illustrate a cross-section of a battery module according to the third embodiment of the present invention.
FIG. 23 illustrates a battery pack including a battery module according to the second embodiment of the present invention.
FIG. 24 illustrates a cross-section of the battery pack of FIG. 23.
FIG. 25 illustrates a vehicle including the battery pack of FIG. 23.

### [DESCRIPTION OF REFERENCE NUMERALS]

1: battery cell
2: module frame
   20: bottom plate
   200: anchor
   201: first portion
   202: second portion
   203: tapered portion
3: thermally conductive resin
   30: extension
   31: upper resin layer
   32: lower resin layer
M: battery module
P: battery pack
   PF: pack frame
V: vehicle
D1: first width (first inner diameter)
D2: second width (second inner diameter)

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention relates to a battery module including a battery cell and a module frame accommodating the battery cell, and a structure of a battery pack including the battery module wherein a thermally conductive resin is provided for mechanically and thermally connecting the battery cell and the module frame while preventing the thermally conductive resin from being detached from the module frame.

Hereinafter, preferred embodiments of the present invention will be described with reference to the accompanying drawings.

### [STRUCTURE OF BATTERY MODULE]

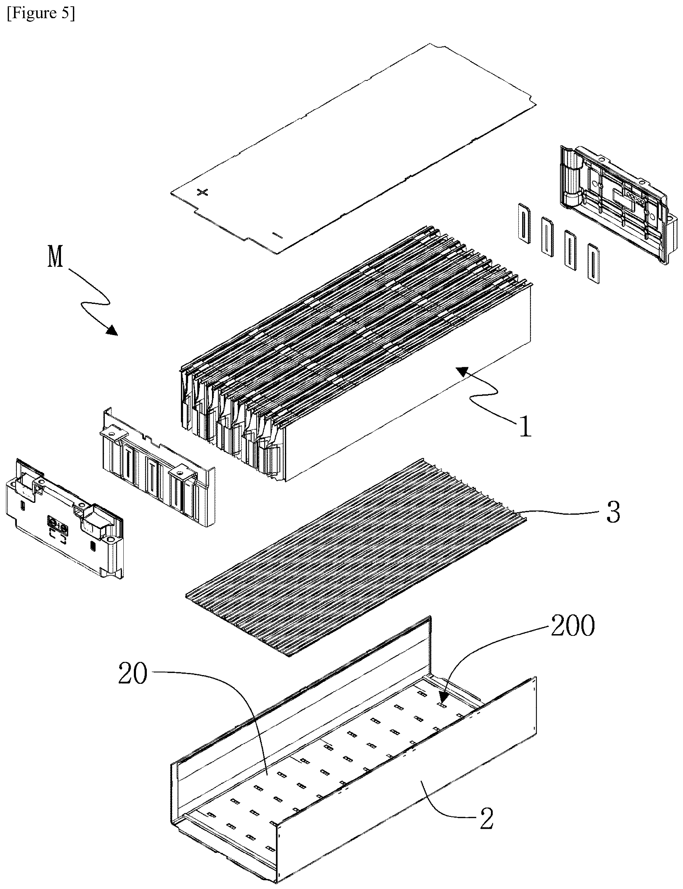

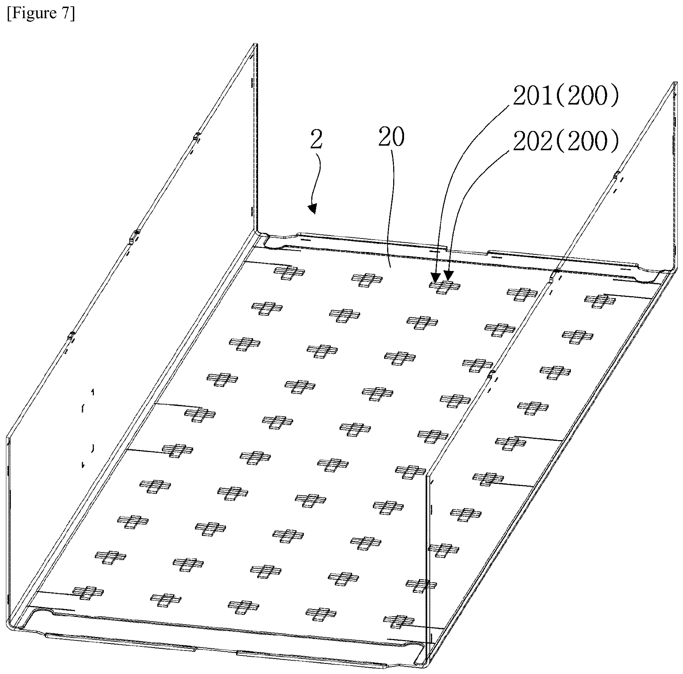

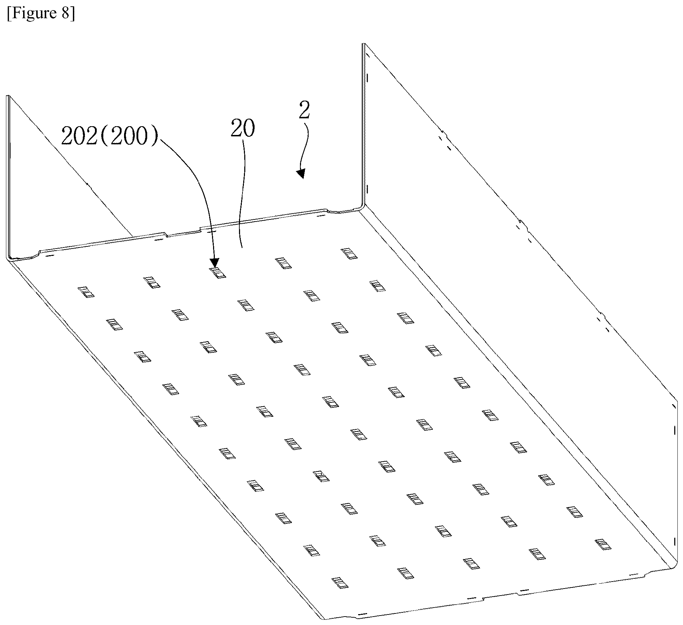

Hereinafter, with reference to FIGS. 5 to 10, a general structure of a battery module according to a preferred embodiment of the present invention will be described.

FIG. 5 illustrates a structure of a battery module according to a first embodiment of the present invention. Referring to FIG. 5, a battery module M according to a preferred embodiment of the present invention may include a battery cell 1 and a module frame 2 accommodating the battery cell 1. The module frame 2 may include a bottom plate 20 whereon the battery cell 1 is disposed.

The battery cell 1 may include a cell laminate wherein a plurality of pouch-type battery cells are laminated in widthwise direction, but is not limited thereto. When the battery cell 1 includes an assembly of multiple unit cells, a bus bar assembly that electrically connects the unit cells may be included in the battery cell 1.

The specific shape of the module frame 2 may vary as long as the bottom plate 20 is included. For example, the module frame 2 according to an embodiment of the present invention may have a shape with two open lengthwise ends and open upper portion, and the battery cell 1 may be accommodated in a module housing including the module frame 2, a pair of end plates covering the two open lengthwise ends, and a top plate covering the open upper portion. However, the structure of the battery module M according to the present invention is not limited thereto.

A thermally conductive resin 3 may be interposed between the battery cell 1 and the bottom plate 20. The thermally conductive resin 3 may be coated on the bottom plate 20 and cured after the battery cell 1 is placed. Accordingly, the upper surface of the thermally conductive resin 3 may be in contact with the bottom surface of the battery cell 1, and the thermally conductive resin 3 and the battery cell 1 may be firmly connected to each other.

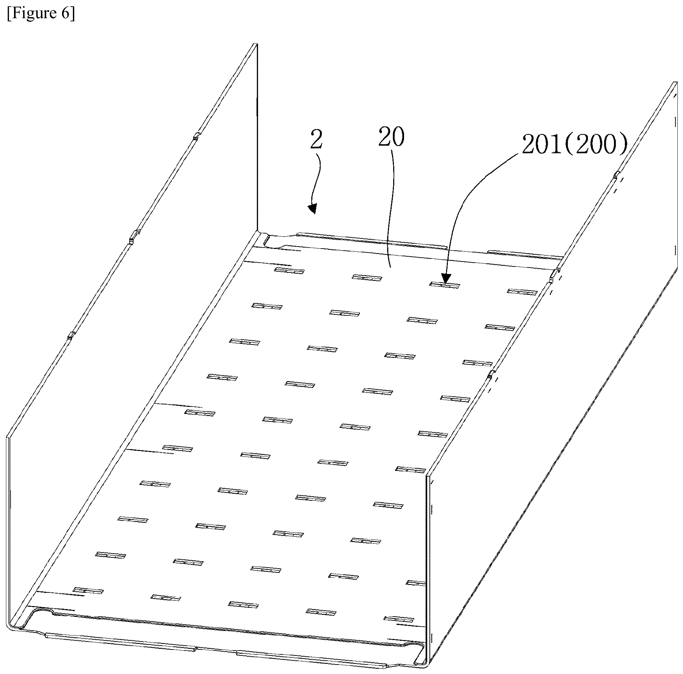

FIGS. 6 to 8 illustrate a structure of a module frame according to the first embodiment of the present invention. Referring to FIGS. 6 to 8, an anchor 200 including a hole perforating the bottom plate 20 vertically or a groove recessed downward from the upper surface of the bottom plate 20 may be provided at the bottom plate 20. Length, depth and/or cross-sectional shape of anchor 200 are not limited as long as the anchor 200 includes a space extending downward from the upper surface of the bottom plate 20.

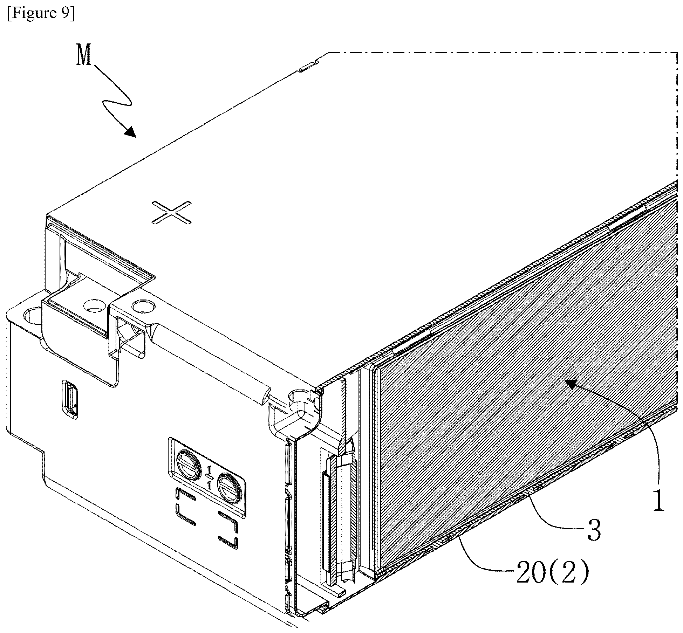

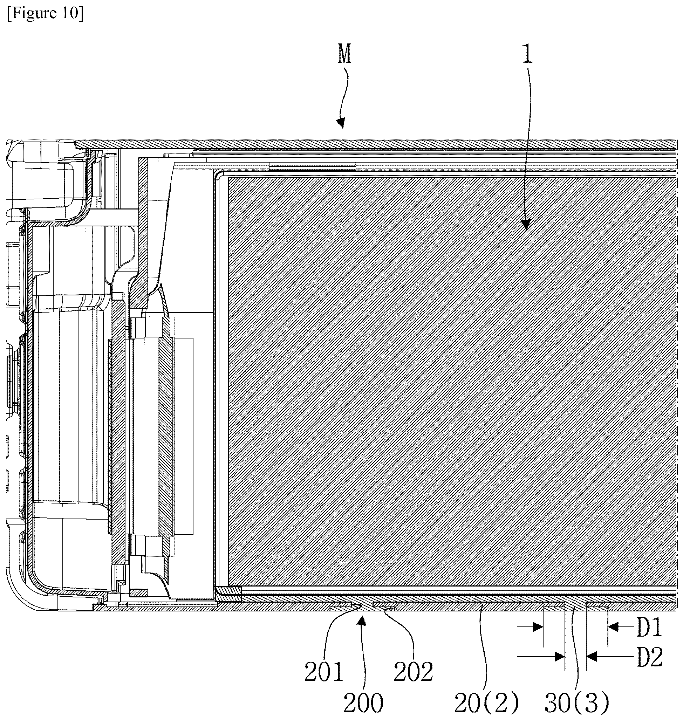

FIGS. 9 and 10 illustrate a cross-section of a battery module according to the first embodiment of the present invention. Referring to FIGS. 9 and 10, the thermally conductive resin 3 may have an extension 30 extending downward and fills the anchor 200. The extension 30 may be formed by the thermally conductive resin 3 applied on the bottom plate 20 flowing into the anchor 200 and being cured therein.

The anchor 200 and the extension 30 extending vertically may overlap each other in horizontal direction. Accordingly, the thermally conductive resin 3 and the module frame 2 may interfere with each other in horizontal direction, and the thermally conductive resin 3 may be prevented from being detached from the module frame 2 in horizontal direction. In addition, as the contact area between the thermally conductive resin 3 and the module frame 2 increases, the adhesion between the thermally conductive resin 3 and the module frame 2 may be strengthened, and the heat conduction between the thermally conductive resin 3 and the module frame 2 may also be faster.

### [FIRST EMBODIMENT]

Hereinafter, referring to FIGS. 5 to 10, a structure of a battery module according to a first embodiment of the present invention will be described in detail.

Referring back to FIGS. 5 to 8, the anchor 200 may include a hole perforating the bottom plate 20.

The anchor 200 may be arranged in grid of multiple rows and/or multiple columns. Preferably, the anchor 200 may be arranged in grid of three or more rows and three or more columns. In addition, the rows and/or columns of the anchor 200 may be arranged at equal intervals. Accordingly, the extension 30 and the anchor 200 may equally share the shear stress, and the thermally conductive resin 3 may be prevented from separating from the module frame 2 caused by the breaking of the extension 30.

The anchor 200 according to the first embodiment of the present invention may include a first portion 201 at a predetermined height and a second portion 202 under the first portion 201.

According to the first embodiment of the present invention, the first portion 201 may have a rectangular cross-section of predetermined width and length and extend horizontally, and the second portion 202 may have a rectangular cross-section of predetermined width and length and extend horizontally to intersect the first portion 201.

Referring back to FIGS. 9 and 10, the first portion 201 may have a predetermined first width D1 in horizontal direction, and the second portion 202 may have a second width D2 in horizontal direction greater than the first width D1. Accordingly, the shape of the cross-section of the second portion 202 may not completely encompass the shape of the cross-section of the first portion 201, and the extension 30 may be interfered with from above by the anchor 200 between the first portion 201 and the second portion 202. That is, since the anchor 200 has a shape that limits the displacement of the thermally conductive resin 3 in upward direction, the thermally conductive resin 3 may be prevented from separating from the bottom plate 20 in upward direction.

In one modified example, the first portion and the second portion may have circular cross-sections having a predetermined first inner diameter and a predetermined second inner diameter larger than the first inner diameter, respectively.

In the embodiment of the present invention, when the anchor 200 is formed in a hole shape perforating the bottom plate 20, it is advantageous in that processing the shapes of the first portion 201 and the second portion 202 differently is facilitated as the anchor 200 is processed from both the upper surface and the bottom surface of the bottom plate 20.

### [SECOND EMBODIMENT]

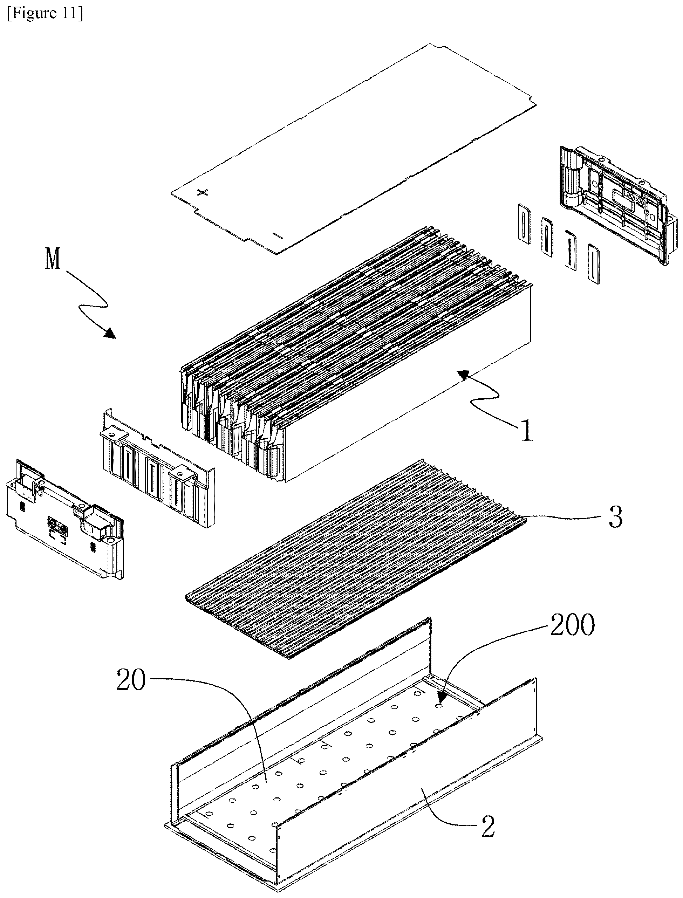

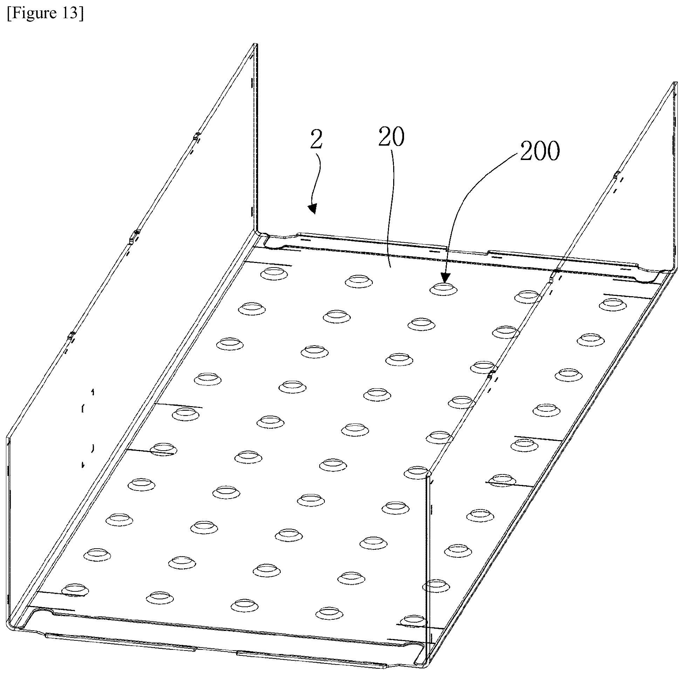

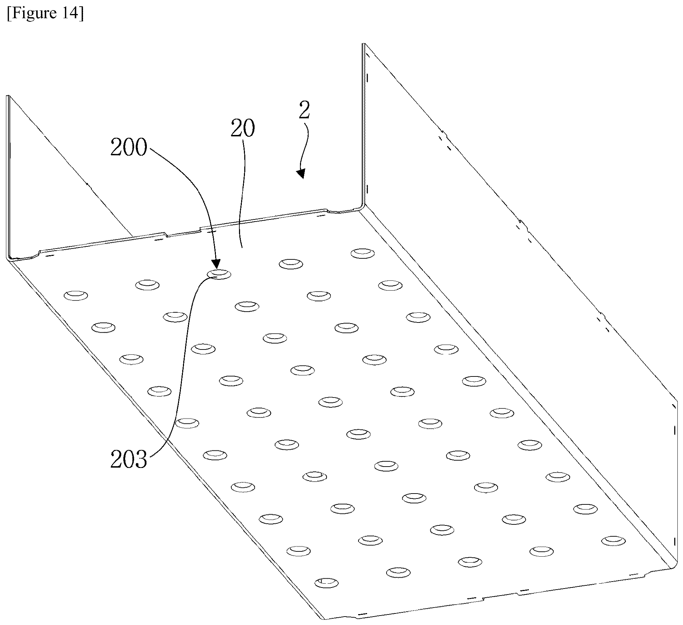

Hereinafter, with reference to FIGS. 11 to 16, a structure of a battery module according to the second embodiment of the present invention will be described in detail.

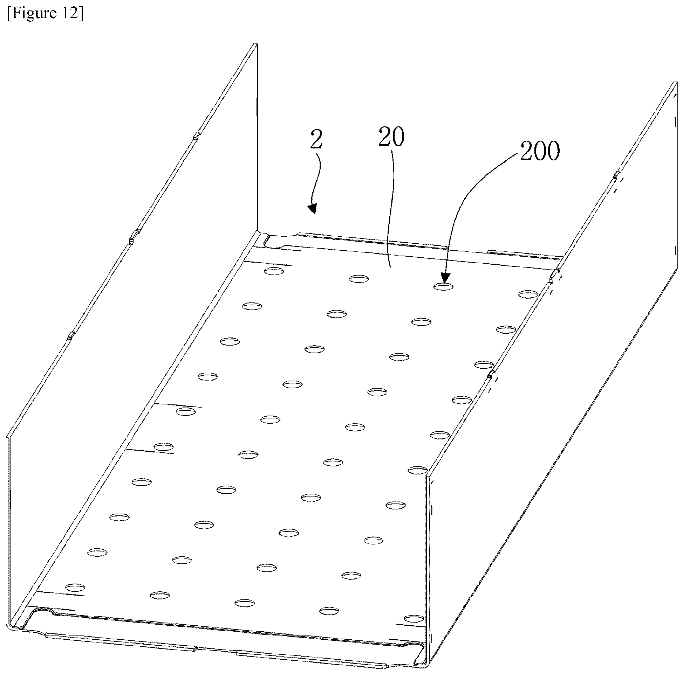

FIG. 11 illustrates the structure of a battery module according to a second embodiment of the present invention, and FIGS. 12 to 14 illustrate a structure of a module frame according to the second embodiment of the present invention. Referring to FIGS. 11 to 14, the anchor 200 may include a hole perforating the bottom plate 20.

The anchor 200 may be arranged in grid of multiple rows and/or multiple columns. Preferably, the anchor 200 may be arranged in grid of three or more rows and three or more columns. In addition, the rows and/or columns of the anchor 200 may be arranged at equal intervals. Accordingly, the extension 30 and the anchor 200 may equally share the shear stress, and the thermally conductive resin 3 may be prevented from separating from the module frame 2 caused by the breaking of the extension 30.

The anchor 200 may include a tapered portion 203 having a cross-section narrowing along upward direction. The tapered portion 203 may interfere with the extension 30 from above. That is, the anchor 200 may have a shape that limits the displacement of the thermally conductive resin 3 in upward direction by providing the tapered portion 203, and as a result, the thermally conductive resin 3 may be prevented from separating from the bottom plate 20 in upward direction.

For example, the tapered portion 203 may have a circular cross-section having an inner diameter decreasing in upward direction at a predetermined height. Specifically, the tapered portion 203 of the anchor 200 according to the second embodiment of the present invention has truncated cone shape with an inner diameter of an inner circumferential surface thereof decreasing in upward direction.

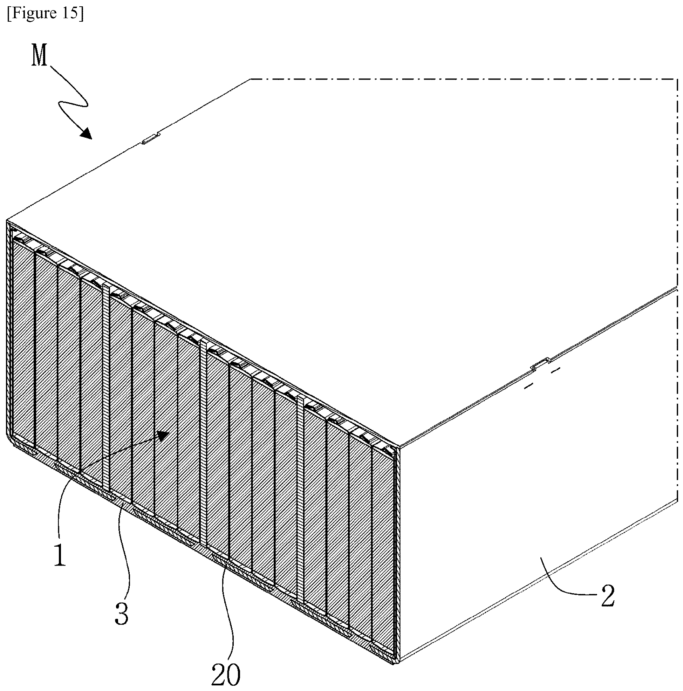

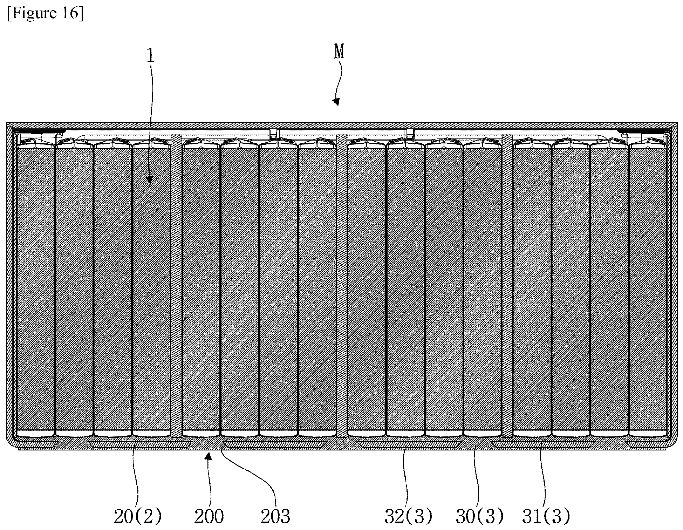

FIGS. 15 and 16 illustrate a cross-section of a battery module according to the second embodiment of the present invention. Referring to FIGS. 15 and 16, the thermally conductive resin 3 may include an upper resin layer 31 disposed on the upper surface of the bottom plate 20 and a lower resin layer 32 disposed on the lower surface of the bottom plate 20. The upper resin layer 31 and the lower resin layer 32 may be connected to each other by the extension 30.

Even when the tapered portion 203 is not present, the lower resin layer 32 may interfere with the bottom plate 20 from above, thereby preventing the entire thermally conductive resin 3 from being detached from the bottom plate 20 in upward direction.

In addition, the thermally conductive resin 3 connects the upper and lower surfaces of the bottom plate 20 such that heat generated from the battery cell 1 may be more effectively dissipated to the outside of the module frame 2. Here, as in the embodiment of the present invention, the larger the area where the lower resin layer 32 is exposed to the outside of the module frame 2, the greater the heat dissipation effect may be expected.

As in the embodiment of the present invention, when the anchor 200 includes a hole perforating the bottom plate 20, it is advantageous in that the processing of the tapered portion 203 is facilitated as it is not necessary to form an undercut shape for processing the tapered portion 203.

### [THIRD EMBODIMENT]

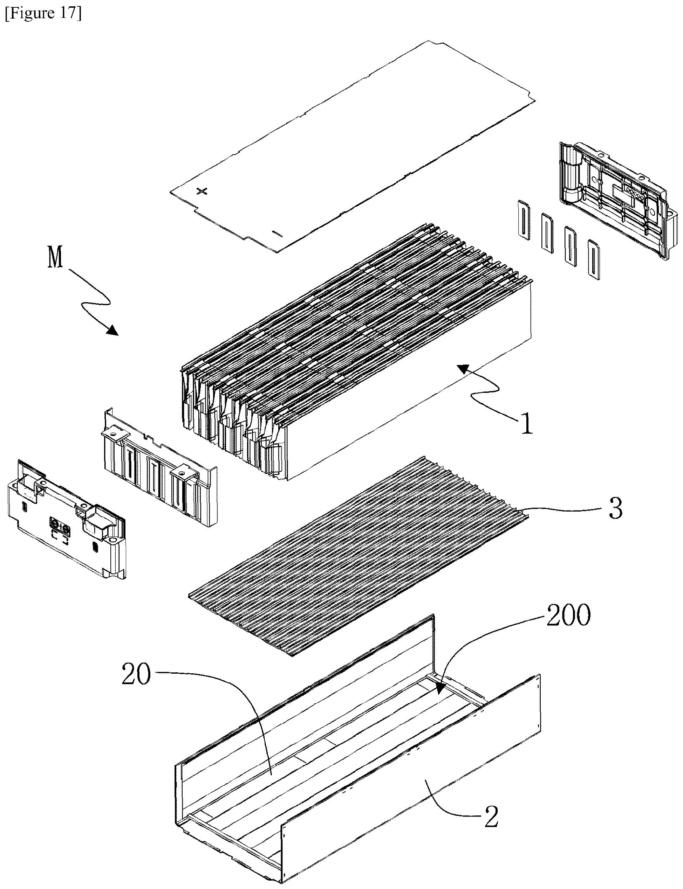

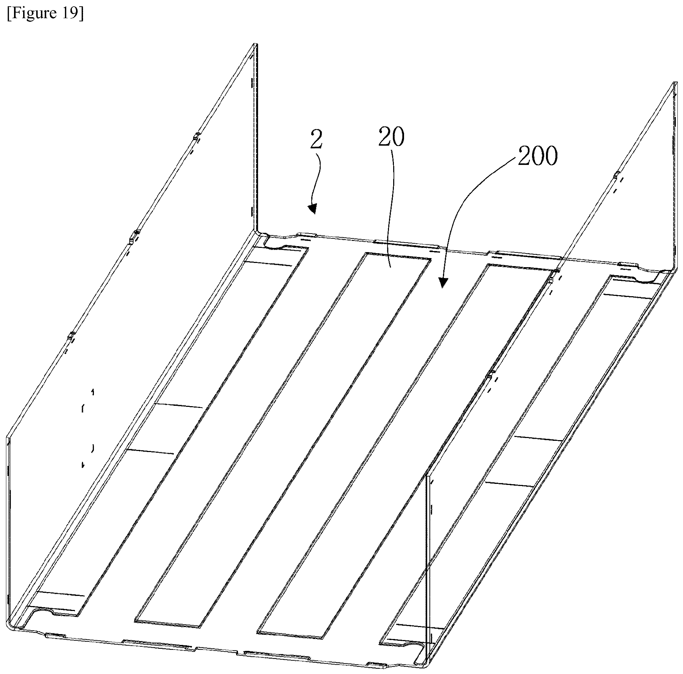

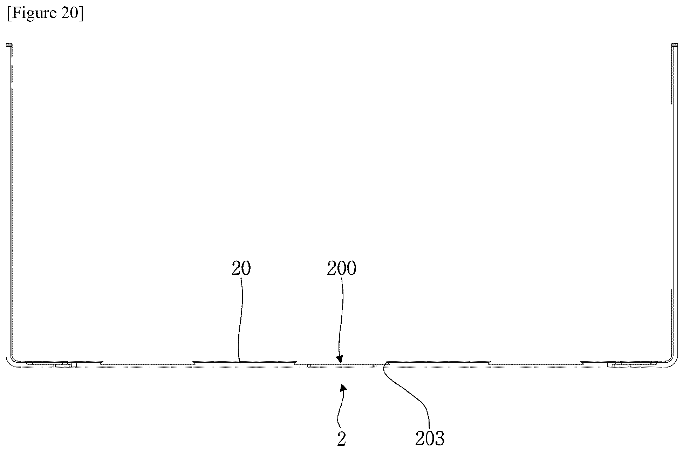

Hereinafter, with reference to FIGS. 17 to 22, a structure of a battery module according to a third embodiment of the present invention will be described in detail.

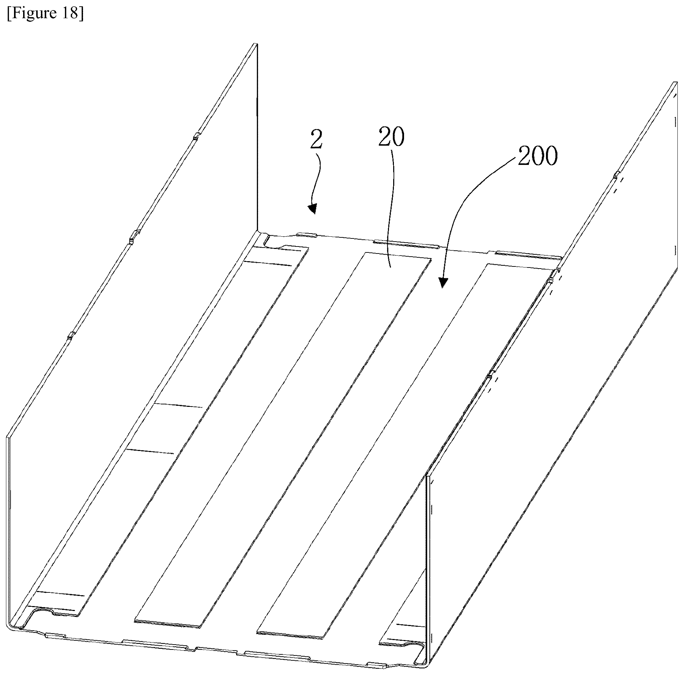

FIG. 17 illustrates a structure of a battery module according to a third embodiment of the present invention, and FIGS. 18 to 20 illustrate a structure of a module frame according to the third embodiment of the present invention. Referring to FIGS. 17 to 20, the anchor 200 may include a groove recessed downward from the upper surface of the bottom plate 20.

The anchor 200 may be arranged in grid of multiple rows and/or multiple columns. Preferably, the anchor 200 may be arranged in grid of three or more rows and three or more columns. In addition, the rows and/or columns of the anchor 200 may be arranged at equal intervals. Accordingly, the extension 30 and the anchor 200 may equally share the shear stress, and the thermally conductive resin 3 may be prevented from separating from the module frame 2 caused by the breaking of the extension 30.

However, it is not necessary that the anchors 200 be arranged in grid. For example, the anchors 200 according to the third embodiment of the present invention may include a groove extending in lengthwise direction, or a plurality of grooves arranged in widthwise direction.

The above anchor 200 may include a first portion 201 at a predetermined height and a second portion 202 under the first portion 201.

Here, the first portion 201 may have a predetermined first width D1 in horizontal direction, and the second portion 202 may have a second width D2 in horizontal direction greater than the first width D1. Accordingly, the shape of the cross-section of the second portion 202 may not completely encompass the shape of the cross-section of the first portion 201, and the extension 30 may be interfered with from above by the anchor 200 between the first portion 201 and the second portion 202. That is, since the anchor 200 has a shape that limits the displacement of the thermally conductive resin 3 in upward direction, the thermally conductive resin 3 may be prevented from separating from the bottom plate 20 in upward direction.

For example, the first portion may have a rectangular cross-section having a first width and extend in lengthwise direction, and the second portion may have a rectangular cross-section having a second width greater than the first width and extend along lengthwise direction.

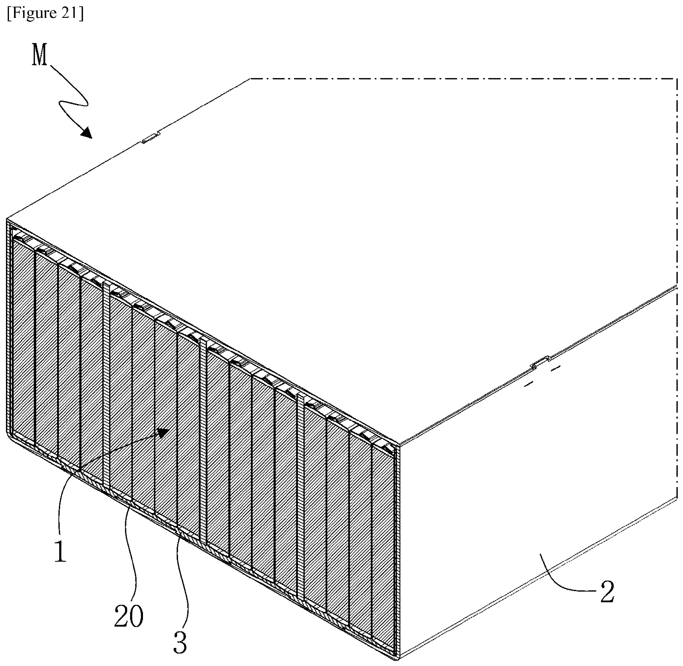

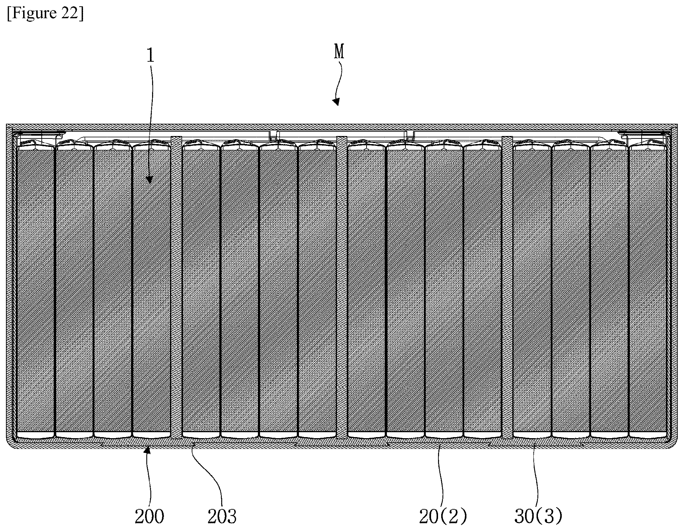

FIGS. 21 and 22 illustrate a cross-section of a battery module according to the third embodiment of the present invention. Referring to FIGS. 21 and 22, the anchor 200 may include a tapered portion 203 having a cross-section narrowing along upward direction. The tapered portion 203 may interfere with the extension 30 from above. That is, the anchor 200 has a shape that limits the displacement of the thermally conductive resin 3 in upward direction by the tapered portion 203, and thus the thermally conductive resin 3 may be prevented from separating from the bottom plate 20 in upward direction.

For example, the tapered portion 203 may have a rectangular cross-section narrowing along upward direction and extend in lengthwise direction. Specifically, the anchor 200 according to the third embodiment of the present invention may include the tapered portion 203 that extends in lengthwise direction and have a trapezoidal cross-section with a lower width and an upper width smaller than the lower width in lengthwise direction.

When the anchor 200 includes a groove according to the third embodiment of the present invention, it is advantageous in that the structural rigidity of the bottom plate 20 is maintained while enjoying the effects according to the present invention. In such case, in order to form the tapered portion 203, it is necessary to form an undercut shape in the anchor 200. Thus, it is preferable that the anchor 200 be processed to have a constant cross-section in lengthwise direction as in the third embodiment of the present invention.

### [BATTERY PACK INCLUDING BATTERY MODULE]

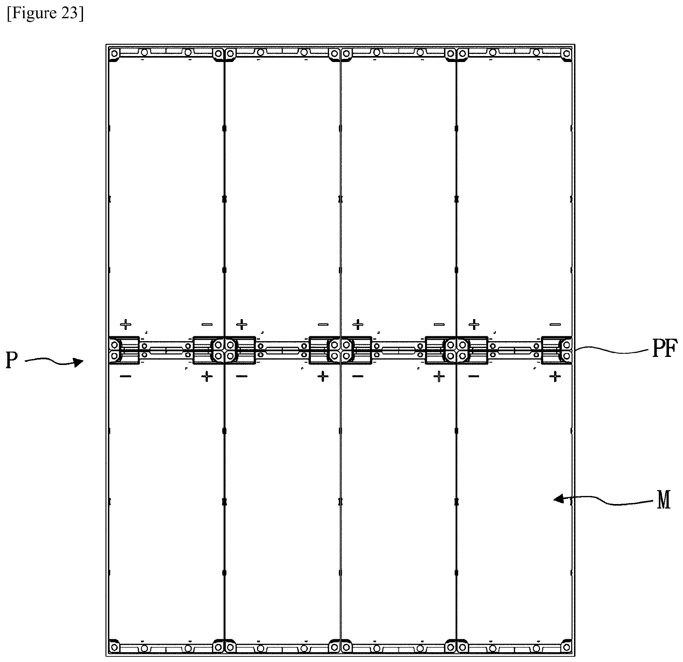

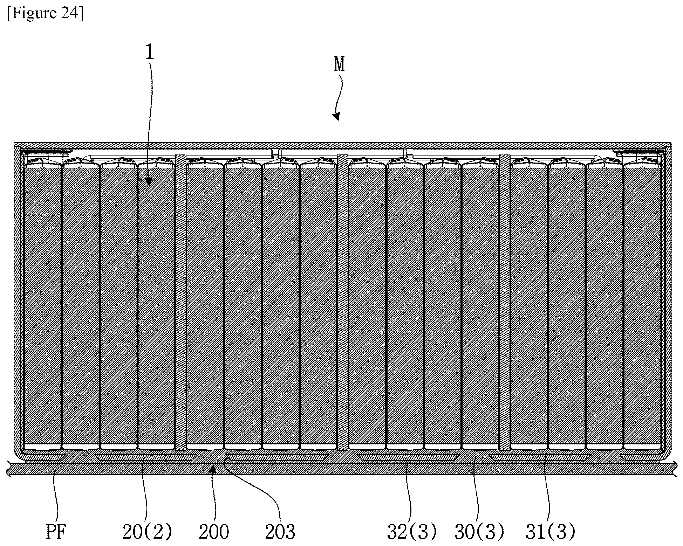

Hereinafter, referring to FIGS. 23 and 24, the structure of a battery pack including a battery module according to the second embodiment of the present invention will be described in detail. However, it will be understood from the following description that the structure of this battery pack is also effective for a battery pack including a battery module according to another embodiment of the present invention.

FIG. 23 illustrates a battery pack including a battery module according to the second embodiment of the present invention. Referring to FIG. 23, a plurality of battery modules M may be integrated and accommodated in a pack frame PF to form a battery pack P. Here, the battery modules M may be electrically connected to each other in series and/or in parallel to form a higher voltage and/or higher capacity battery.

FIG. 24 illustrates a cross-section of the battery pack of FIG. 23. Referring to FIG. 24, when the anchor 200 includes a hole perforating the bottom plate 20, the thermally conductive resin 3 may be connected to the pack frame PF.

For example, the lower end portion of the extension 30 may be coupled to the pack frame PF.

Alternatively, as in the second embodiment of the present invention, when the thermally conductive resin 3 includes the upper resin layer 31 and the lower resin layer 32, the lower resin layer 32 may be attached to the pack frame PF. Preferably, the lower resin layer 32 may connect the lower surface of the bottom plate 20 and the pack frame PF. Accordingly, both the bottom of the battery cell 1 and the bottom of the battery module M may be thermally connected to the pack frame PF.

Since the thermally conductive resin 3 is connected to the pack frame PF, the heat generated from the battery cell 1 may be conducted to the module frame 2, and then dissipated to the outside of the pack frame PF.

In addition, in such case, it is also advantageous in that the battery module M is prevented from being detached from the pack frame PF in horizontal direction due to the anchoring effect of the anchor 200.

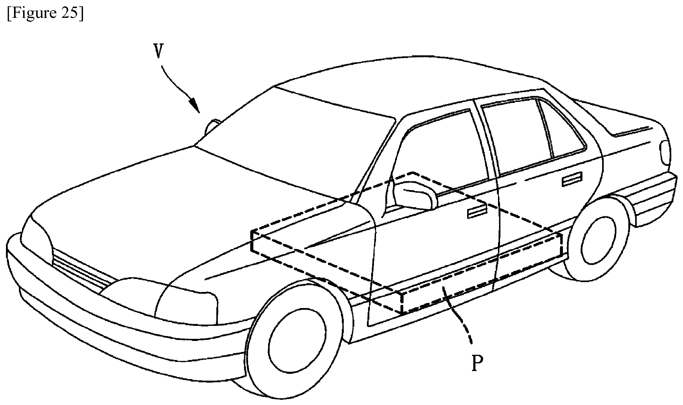

FIG. 25 illustrates a vehicle including the battery pack of FIG. 23. Referring to FIG. 25, the battery pack P may be built into a vehicle V as a power source. The vehicle V may be a hybrid vehicle or an electric vehicle, but is not limited thereto. In addition, the vehicle V may be a two-wheeled vehicle or a four-wheeled vehicle, but is not limited thereto.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell;
a module frame having a bottom plate whereon the battery cell is disposed; and
a thermally conductive resin interposed between a bottom surface of the battery cell and the bottom plate,
wherein the bottom plate is provided with a hole-shaped anchor arranged in grid of multiple rows and multiple columns,
the thermally conductive resin is provided with an extension extending downward and filling the anchor, and
the extension has a shape interfering with the anchor in horizontal direction.

2. The battery module of claim 1, wherein the anchor is arranged in grid of three or more rows and three or more columns.

3. The battery module of claim 1, wherein the rows and columns of the anchor are arranged at equal intervals.

4. The battery module of claim 1, wherein the anchor comprises: a first portion having a first width along horizontal direction; and a second portion disposed under the first portion and having a second width greater than the first width along horizontal direction.

5. The battery module of claim 4, wherein the anchor comprises: a first portion of a circular cross-section having a first inner diameter; and a second portion of a circular cross-section disposed under the first portion and having a second inner diameter greater than the first inner diameter.

6. The battery module of claim 1, wherein the anchor comprises a tapered portion having a cross-section narrowing along upward direction.

7. The battery module of claim 6, wherein the anchor comprises a tapered portion having a circular cross-section narrowing along upward direction.

8. The battery module of claim 7, wherein the tapered portion of the anchor has truncated cone shape with an inner diameter of an inner circumferential surface thereof decreasing in upward direction.

9. The battery module of claim 1, wherein the thermally conductive resin comprises: an upper resin layer connected to an upper portion of the bottom plate; and a lower resin layer connected to a lower portion of the bottom plate, and
the extension connects the upper resin layer and the lower resin layer through the anchor.

10. A battery pack comprising a battery module of claim 9, the battery pack further comprises:
a pack frame whereon the battery module is disposed,
wherein a lower resin layer connects a bottom surface of a bottom plate and a pack frame.

11. a battery module comprising:
a battery cell;
a module frame having a bottom plate whereon the battery cell is disposed; and
a thermally conductive resin interposed between a bottom surface of the battery cell and the bottom plate,
wherein the bottom plate is provided with a groove-shaped anchor arranged in grid of multiple rows and multiple columns and recessed downward,
the thermally conductive resin is provided with an extension extending downward and filling the anchor, and
the extension has a shape interfering with the anchor in horizontal direction.

12. The battery module of claim 11, wherein the anchor is arranged in grid of three or more rows and three or more columns.

13. The battery module of claim 11, wherein the rows and columns of the anchors are arranged at equal intervals.

14. The battery module of claim 11, wherein the anchor comprises: a first portion having a first width along horizontal direction; and a second portion disposed under the first portion and having a second width greater than the first width along horizontal direction.

15. The battery module of claim 14, wherein the anchor comprises: a first portion having a rectangular cross-section of a first width and extending in lengthwise direction; and a second portion disposed under the first portion and having a rectangular cross-section of a second width greater than the first width and extending in horizontal direction.

16. The battery module of claim 11, wherein the anchor comprises a tapered portion having a cross-section narrowing along upward direction.

17. The battery module of claim 16, wherein the anchor comprises a tapered portion extending in lengthwise direction and having a rectangular cross-section narrowing along upward direction.

18. The battery module of claim 17, wherein the tapered portion of the anchor extends in lengthwise direction and has a trapezoidal cross-section with a lower width and an upper width thereof smaller than the lower width in lengthwise direction.
